Europäisches Patentamt

(19) European Patent Office

Office européen des brevets

(11) Numéro de publication: **0 057 806**
A2

(12) # DEMANDE DE BREVET EUROPEEN

(21) Numéro de dépôt: **81810500.9**

(22) Date de dépôt: **16.12.81**

(51) Int. Cl.³: **B 65 G 47/64**
B 65 G 37/00, B 65 B 35/44

(30) Priorité: **05.02.81 CH 769/81**

(43) Date de publication de la demande:
**18.08.82 Bulletin 82/33**

(84) Etats contractants désignés:
**AT BE CH DE FR GB IT LI LU NL SE**

(71) Demandeur: **SAPAL, Société Anonyme des Plieuses Automatiques**
**44, Av. du Tir Fédéral**
**CH-1024 Ecublens(CH)**

(72) Inventeur: **Chenevard, Alexis**
**Résidence de la Côte 20**
**CH-1110 Morges(CH)**

(74) Mandataire: **Nithardt, Roland**
**CABINET ROLAND NITHARDT Rue Edouard Verdan 15**
**CH-1400 Yverdon(CH)**

(54) **Dispositif d'alimentation automatique pour une ligne d'emballage de produits alimentaires.**

(57) Le dispositif d'alimentation automatique selon l'invention comprend un ruban d'alimentation 4, un ruban diviseur 5 pivotable, un ruban de réserve 6, un ruban de réserve complémentaire 7 et un ruban transversal 8. La caractéristique essentielle réside dans le fait que les rubans de réserve sont disposés entre le ruban diviseur et le ruban transversal.

FIG. I

EP 0 057 806 A2

Croydon Printing Company Ltd.

DISPOSITIF D'ALIMENTATION AUTOMATIQUE POUR UNE LIGNE D'EMBALLAGE
DE PRODUITS ALIMENTAIRES

La présente invention concerne un dispositif d'alimentation automatique pour une ligne d'emballage de produits alimentaires, notamment de tablettes ou de bâtons de chocolat moulés ou enrobés, comportant au moins un ruban d'alimentation pour transporter des rangées successives de produits à emballer, au moins un ruban transversal disposé sensiblement perpendiculairement par rapport à la direction de déplacement des produits sur le ruban d'alimentation pour conduire les produits à une station d'emballage, au moins un ruban diviseur mobile pour prélever des rangées successives de produits du ruban d'alimentation et pour les transposer sur le ruban transversal, et au moins un ruban de réserve destiné à stocker momentanément des rangées de produits avant leur transposition sur le ruban transversal.

On connaît déjà des installations d'emballage équipées de dispositifs d'alimentation de ce type. En particulier, la demande de brevet allemand publiée avant examen n° 2'803'223 décrit un ensemble comportant un ruban d'alimentation, un ruban de réserve monté dans le prolongement du ruban d'alimentation, un ruban diviseur disposé à la suite du ruban de réserve et un ruban transversal pour amener les produits à emballer, transportés par le ruban diviseur, vers la machine à emballer. Dans ce dispositif, le ruban de réserve se trouve pris entre le ruban d'alimentation et le ruban diviseur, de sorte que tous les produits transportés par le ruban d'alimentation passent sur le ruban de réserve, avant d'être pris en charge par le ruban diviseur et déposés soit sur le ruban transversal, soit simplement transmis sur un autre ruban transporteur de la ligne, qui sert de ruban d'alimentation à la station d'emballage suivante.

Cette façon de procéder implique une sollicitation mécanique très importante à la fois pour le ruban de réserve et pour le ruban diviseur mobile. En effet, comme tous les produits transportés par le ruban d'alimentation traversent obligatoirement le ruban de réserve, celui-ci effectuera autant de pas qu'on dénombre de rangées de produits transportés par le ruban d'alimentation, par exemple autant de pas que de rangées de plaques de chocolat fabriquées par la mouleuse.

**0057806**

Prenons par exemple le cas d'une machine de production, mouleuse ou enrobeuse connue en soi, fabriquant cent rangées de produits à la minute, qui doivent être distribuées en continu à cinq machines d'emballage. A chaque machine, est associé un ruban transversal, un ruban diviseur et un ruban de réserve. Le premier ruban de réserve avance pas à pas cent fois par minute, puisque tous les produits fabriqués le traversent obligatoirement. Le ruban diviseur est articulé autour d'un axe disposé à son extrémité adjacente au ruban de réserve, de sorte que son extrémité libre puisse pivoter entre le ruban transversal disposé au-dessus du niveau d'alimentation, et un ruban qui servira de ruban d'alimentation à la machine suivante. Ce ruban diviseur bascule alternativement de façon à prélever 1/5 de la production, soit 20 rangées par minute, et à les transposer sur le ruban transversal correspondant.

La production restante, soit 80 rangées par minute, traversera le second ruban de réserve qui sera sollicité 80 fois par minute. Le ruban de réserve de la troisième station sera sollicité 60 fois par minute, celui de la quatrième station 40 fois par minute et enfin celui de la cinquième station 20 fois par minute. On comprend aisément qu'un tel système impose des contraintes mécaniques très importantes aux dispositifs les plus sollicités et engendre un déséquilibre dans la ligne, du fait que les mécanismes les plus sollicités connaissent une usure plus rapide que les autres.

En outre, les accélérations très importantes du ruban risquent de provoquer des glissements du produit par rapport au ruban, de sorte que le pas effectif du produit est inférieur au pas réel du ruban.

La présente invention se propose de pallier ces inconvénients, en réalisant un dispositif dans lequel tous les dispositifs d'alimentation automatique d'une même ligne sont soumis aux mêmes sollicitations, et par suite aux mêmes contraintes mécaniques, et dans lequel la cadence de traitement des rangées peut être sensiblement augmentée sans risque de perte d'adhérence des produits.

Dans ce but, le dispositif selon l'invention est caractérisé en ce que le ruban de réserve est disposé entre le ruban diviseur mobile et le ruban transversal.

La présente invention sera mieux comprise en référence à la description d'un exemple de réalisation et du dessin annexé, dans lequel :

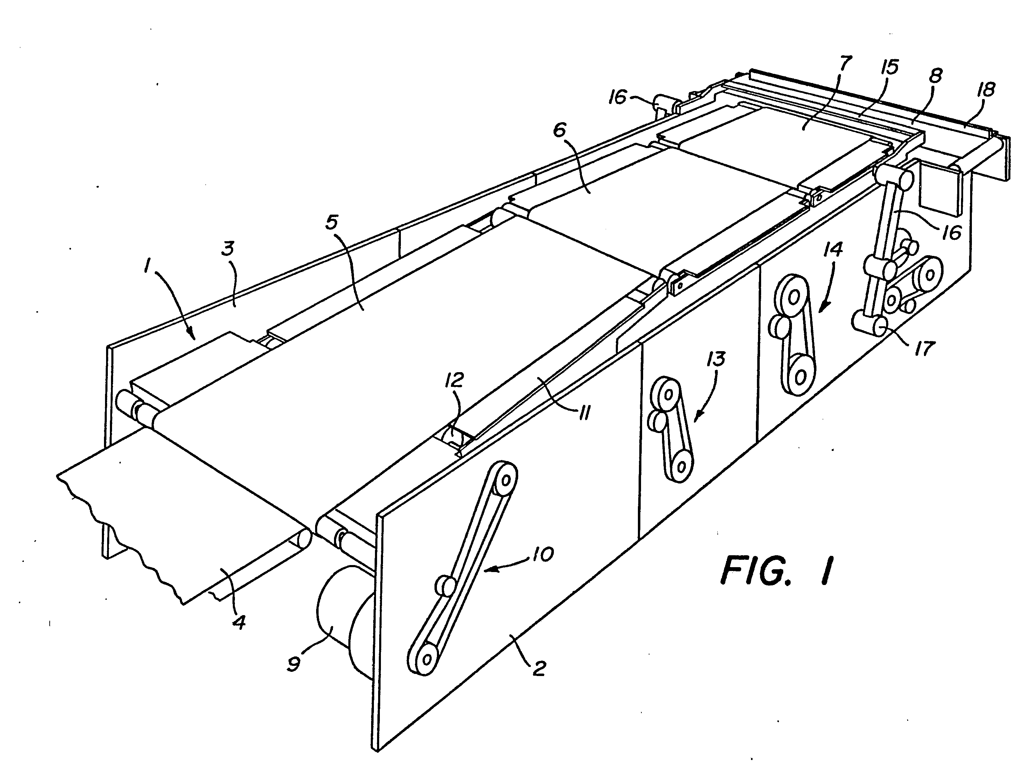

. La figure 1 représente une vue en perspective d'un dispositif selon l'invention et,

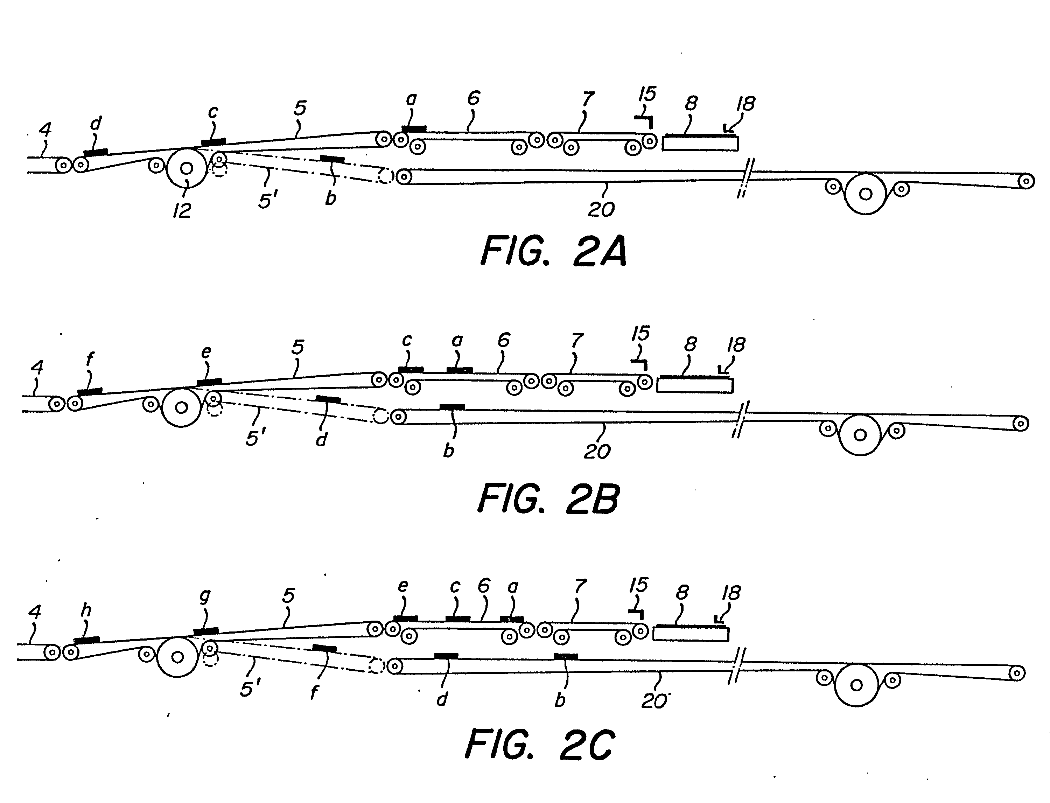

Les figures 2A à 2E représentent des vues schématiques de ce dispositif, illustrant son principe de fonctionnement lorsqu'il est associé à la première machine d'emballage d'une ligne à deux stations.

En référence à la fig. 1, le dispositif d'alimentation automatique comporte un châssis 1 composé essentiellement de deux parois latérales 2 et 3, sur lesquelles sont montés les supports des rubans transporteurs et les mécanismes d'entraînement. Dans l'exemple représenté, le dispositif comporte un ruban d'alimentation 4, un ruban séparateur mobile 5, un ruban de réserve 6, un ruban de réserve complémentaire 7 et un ruban transversal 8. Le ruban d'alimentation 4 transporte les rangées de produits fabriqués par la mouleuse ou l'enrobeuse (non représentée) de la ligne. Ce ruban est entraîné de façon intermittente par un moteur d'entraînement 9 et un dispositif à poulies et courroie 10 représenté schématiquement.

Le ruban diviseur 5 glisse sur un support plan 11 pivotable autour d'un axe correspondant à l'axe de rotation du rouleau d'entraînement 12. Ce mouvement de pivotement permet au ruban diviseur 5 d'adopter deux positions : une position inférieure (non représentée) dans laquelle il transfère les produits le long de la ligne en les faisant passer sous les rubans de réserve et le ruban transversal, et une position supérieure (représentée par la figure) dans laquelle les produits sont amenés aux rubans de réserve.

Les mécanismes d'entraînement 10, 13 et 14 sont des mécanismes connus en soi pour assurer l'entraînement pas-à-pas des rubans transporteurs de ce type d'installation.

Un poussoir 15, fixé aux extrémités libres de deux leviers 16 pivotables autour d'axes fixes 17, permet d'aligner, de guider et de pousser les rangées de produits sur le ruban transversal 8 contre une butée fixe 18.

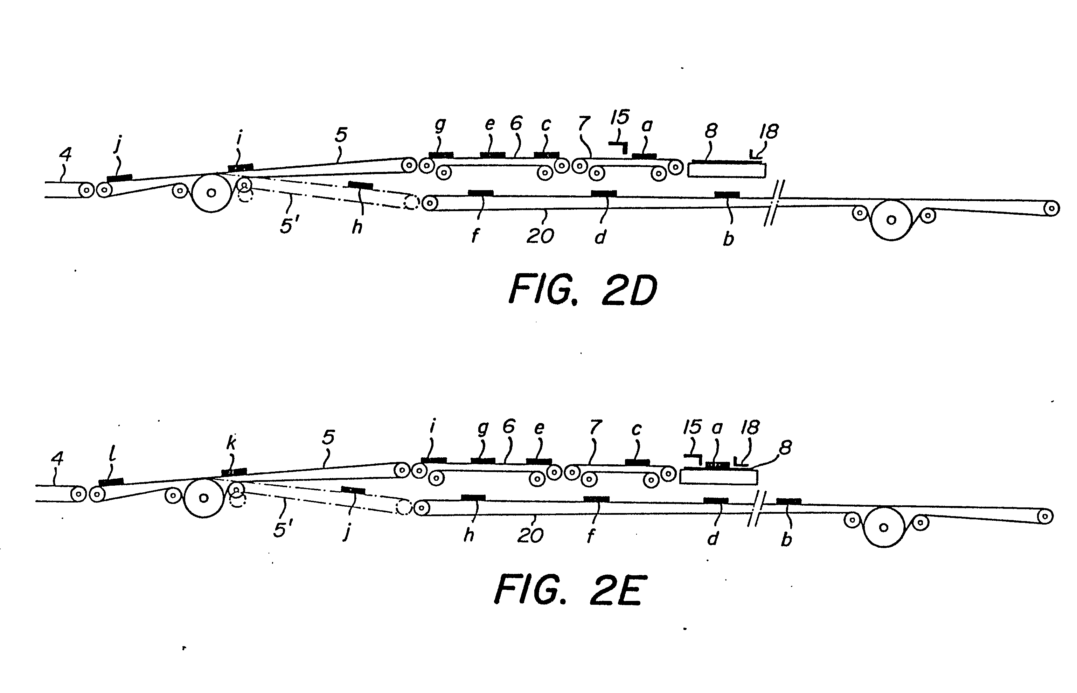

Les fig. 2 permettront de comprendre plus aisément le fonctionnement du dispositif représenté par la fig. 1. Comme mentionné précédemment, le dispositif comporte le ruban d'alimentation 4, le ruban diviseur 5 mobile entre sa position supérieure représentée en traits pleins et sa position inférieure 5' représentée en traits mixtes, un premier ruban de réserve 6, un ruban de réserve complémentaire 7 et un ruban transversal 8. Les rubans de réserve et le ruban transversal sont disposés au-dessus du ruban transporteur 20, qui sert de ruban d'alimentation à la machine d'emballage suivante. Dans l'exemple représenté, on part de l'hypothèse que la machine de production (non représentée) alimente deux machines d'emballage, de sorte que les rangées de produits a, b, c etc. sont alternativement transmises à l'une et l'autre des deux machines. C'est ainsi que la première rangée a est transposée par le ruban diviseur 5 dans sa position haute sur le premier ruban de réserve 6 et la seconde rangée b, par le ruban diviseur dans sa position inférieure 5' sur le ruban d'alimentation 20 de la deuxième machine d'emballage (non représentée). Par la suite, le ruban diviseur reprendra sa position initiale, de sorte que la rangée suivante c soit à nouveau amenée sur le ruban de réserve 6.

Comme le montrent les fig. 2B et 2C, chaque deuxième rangée de produits a, b, c, etc. est transposée sur le ruban de réserve 6 jusqu'à ce que celui-ci soit saturé. A ce moment (voir fig. 2D), la première rangée a est transposée sur le ruban de réserve complémentaire 7 d'où elle est prise en charge par le poussoir 15 (voir fig. 2E) et poussée sur le ruban transversal 8 qui l'amène à la machine d'emballage (non représentée). Pendant le transfert, le ruban de réserve 7 est entraîné à la même vitesse que le poussoir pour éviter toute friction sur la face inférieure du produit. Les autres rangées b, d, f, etc. sont véhiculées par le ruban transporteur 20 servant de ruban d'alimentation à la seconde machine d'emballage (non représentée).

Bien entendu, l'exemple illustré par les fig. 2 pourrait être généralisé à une ligne comportant un nombre quelconque de machines d'emballage. Par exemple, sur une ligne comportant trois stations d'emballage, si la première rangée est amenée à la première station, les deux rangées suivantes sont transposées par le ruban diviseur vers les deux stations suivantes, le second ruban diviseur, associé à la seconde station d'emballage, fonctionnera de façon à amener la première des deux rangées restantes

à la station d'emballage correspondante et la dernière rangée à la troisième station de la ligne.

Quel que soit le nombre de machines d'emballage montées sur la ligne, les rubans de réserve ne transportent que le nombre de rangées qui sont effectivement traitées par la machine correspondante.

Revendications

1. Dispositif d'alimentation automatique pour une ligne d'emballage de produits alimentaires, notamment de tablettes ou de bâtons de chocolat moulés ou enrobés, comportant au moins un ruban d'alimentation pour transporter des rangées successives de produits à emballer, au moins un ruban transversal disposé sensiblement perpendiculairement par rapport à la direction de déplacement des produits sur le ruban d'alimentation, pour conduire les rangées à une station d'emballage, au moins un ruban diviseur mobile pour prélever des rangées successives de produits du ruban d'alimentation et pour les transposer sur le ruban transversal, et au moins un ruban de réserve destiné à stocker momentanément des rangées de produits avant leur transposition sur le ruban transversal, caractérisé en ce que le ruban de réserve est disposé entre le ruban diviseur mobile et le ruban transversal.

2. Dispositif selon la revendication 1, caractérisé en ce qu'il comporte deux rubans de réserve successifs, disposés entre le ruban diviseur mobile et le ruban transversal.

FIG. 1

## FIG. 2A

4 d c 5 a 6 7 15 8 18
12 5' b 20

## FIG. 2B

4 f e 5 c a 6 7 15 8 18
5' d b 20

## FIG. 2C

4 h g 5 e c 6 a 7 15 8 18
5' f d b 20

0057806

FIG. 2D

FIG. 2E

3/3

0057806